# EUROPEAN PATENT APPLICATION

(11) **EP 4 837 410 A1**
(43) Date of publication of application: **11.11.2026**
(21) Application number: 24915375.0
(22) Date of filing: 05.01.2024
(51) Int. Cl.: A01K 1/02

(54) **ANIMAL TRANSPORTATION DEVICE WITH INTEGRATED FIXING DEVICE AND ANIMAL CARRIER**

(71) Applicant: Jani International Pte. Ltd., Singapore 569874 (SG)
(72) Inventor: CHENG, Chinming, Wan Chai Hong Kong, 999077 (HK); CHENG, Kaiwen, Wan Chai Hong Kong, 999077 (HK)
(74) Representative: Pfenning, Meinig & Partner mbB
(86) International application number: PCT/SG2024/050012
(87) International publication number: WO 2025/147208

(57) **Abstract**

The present disclosure provides an animal carrier comprising: a box body comprising a top surface and a bottom surface opposite to each other, a first side surface and a second side surface opposite to each other, and an animal accommodating space formed by connecting a third side surface and a fourth side surface which are opposite to each other; and a fixing frame fixedly arranged on the bottom surface, wherein the box body can be fixed to a vehicle fixing base via the fixing frame, and the fixing frame comprises a long pipe, and a first short pipe and a second short pipe which are opposite to each other and are connected to the two ends of the long pipe respectively. Two ends of the bent pipe are connected to the first short pipe and the second short pipe respectively, so that the bent pipe forms a closed frame structure with the long pipe, the first short pipe and the second short pipe, and the bent pipe is provided with at least one bent part extending towards the interior of the closed frame structure. The present disclosure provides an animal transportation device.

## Description

### TECHNICAL FIELD

The present disclosure relates to animal transportation carriers, particularly to an animal transportation carrier that is mountable in a vehicle for transportation.

### BACKGROUND

Various pet transportation cages are currently available on the market, which may be secured by vehicle seat belts to prevent pets from escaping out of moving vehicles. However, how to stably fix a pet transportation cage in a vehicle and how to enhance overall strength of the pet transportation cage to improve safety of a pet in the moving vehicle remain urgent issues for pet owners.

### SUMMARY

The present disclosure provides an animal transportation device having an integrated fixing device, and an animal carrier. According to the present disclosure, the animal carrier is fixed to a corresponding fixing base by a bottom fixing bracket that is integrated with the animal carrier, and is stably mounted inside a vehicle by mounting the fixing base in the vehicle.

The present disclosure provides an animal carrier including: a box including an animal receiving space formed by connecting a top surface and a bottom surface opposite to each other, a first side surface and a second side surface opposite to each other, and a third side surface and a fourth side surface opposite to each other; and a fixing bracket fixed to the bottom surface. The box may be fixed to a fixing base for a vehicle through the fixing bracket.

In an embodiment, there is a gap between the fixing bracket and a lower edge of the bottom surface.

In an embodiment, the fixing bracket is a rectangular border, and the rectangular border is formed by connecting a pair of opposite long tubes and a pair of short tubes and has a contour corresponding to an outer edge of the bottom surface.

In an embodiment, the fixing bracket has a contour corresponding to an outer edge of the bottom surface, and includes: a rectangular border formed by connecting a pair of opposite long tubes and a pair of short tubes; and at least one fixing rod that bridges and is fixed to the pair of long tubes.

In an embodiment, the fixing bracket includes: a long tube; a first short tube and a second short tube, which are opposite to each other and connected to both ends of the long tube, respectively; and a bent tube having both ends connected to the first short tube and the second short tube respectively, forming a closed frame structure together with the long tube, the first short tube, and the second short tube, and the bent tube having at least one bent portion extending towards an interior of the closed frame structure.

In an embodiment, the animal carrier further includes at least one reinforcing side frame, having a contour corresponding to one of the first side surface and the second side surface or one of the third side surface and the fourth side surface, and being connected to the fixing bracket in a manner perpendicular to the bottom surface and attached to one of the first side surface and the second side surface or one of the third side surface and the fourth side surface.

In an embodiment, the animal carrier further includes at least one reinforcing rib connecting the fixing bracket to the at least one reinforcing side frame.

In an embodiment, the animal carrier further includes a pull-rod device connected to a connection side between the reinforcing side frame and the fixing bracket, and connected to a side of the reinforcing side frame opposite to the connection side, wherein the pull-rod device, the reinforcing side frame, and the fixing bracket are fixedly connected as an integrated structure.

In an embodiment, the animal carrier further includes a pull-rod device fixed to one of the long side surface and the short side surface, and fixedly connected with the fixing bracket as an integrated structure.

In an embodiment, the pull-rod device includes a pivotable grip portion at a free end of the pull-rod device.

In an embodiment, the animal carrier further includes a stabilizing webbing surrounding a periphery of the box.

In an embodiment, the animal carrier further includes a pull-rod device fixed to one of the first side surface, the second side surface, the third side surface, and the fourth side surface, and the stabilizing webbing surrounds the box and the pull-rod device.

In an embodiment, the animal carrier further includes an anchoring device configured to connect to a corresponding anchoring point in the vehicle. The anchoring device includes: a webbing extending through a bottom of the box, an end of the webbing being able to protrude from the bottom surface of the box; and a connection member connected to the end of the webbing and configured to connect to the corresponding fixing point.

In an embodiment, the animal carrier further includes an anchoring device configured to connect to a corresponding anchoring point in the vehicle. The anchoring device includes: at least one webbing, a first end of the webbing being connected to a bottom of the box; an adjuster connected to the webbing, wherein a second end of the webbing extends through the adjuster and is exposed from the adjuster; a connection webbing, a first end of the connection webbing being connected to the adjuster; and a connection member connected to a second end of the connection webbing and configured to connect to the anchoring point.

The present disclosure further provides an animal transportation device, including: the animal carrier as conceived above; and a fixing base. The fixing base includes: a carrier mounting portion configured to accommodate and fix the animal carrier; a support column, one end of which is fixedly connected to a front side of the carrier mounting portion, and another end of which is configured to abut against a floor inside a vehicle; and a connector provided on a rear side of the carrier mounting portion and configured to connect to a corresponding fixing point inside the vehicle.

In an embodiment, the carrier mounting portion has a contour corresponding to a bottom of the animal carrier and includes at least one ridge, the ridge being provided with at least one recess to accommodate and fix the fixing bracket.

### BRIEF DESCRIPTION OF THE DRAWINGS

FIG. 1A illustrates an animal transportation device according to an embodiment of the present disclosure;
FIG. 1B illustrates an animal carrier and a fixing base in an animal transportation device according to an embodiment of the present disclosure;
FIG. 1C illustrates an animal transportation device according to another embodiment of the present disclosure;
FIGS. 2A, 2B, and 2C illustrate an animal carrier according to an embodiment of the present disclosure;
FIGS. 3A and 3B illustrate an animal carrier according to another embodiment of the present disclosure;
FIG. 3C illustrates an animal transportation device according to an embodiment of the present disclosure;
FIGS. 4A and 4B illustrate an animal carrier according to another embodiment of the present disclosure;
FIGS. 5A and 5B illustrate an animal carrier according to another embodiment of the present disclosure;
FIG. 6 illustrates an animal carrier according to another embodiment of the present disclosure;
FIGS. 7A and 7B illustrate an animal carrier according to another embodiment of the present disclosure;
FIGS. 8A and 8B illustrate an animal carrier according to another embodiment of the present disclosure;
FIGS. 9A and 9B illustrate an animal carrier according to another embodiment of the present disclosure;
FIGS. 10A and 10B illustrate an animal carrier according to another embodiment of the present disclosure;
FIGS. 11A and 11B illustrate an animal transportation device according to another embodiment of the present disclosure; and
FIGS. 12A and 12B illustrate an animal transportation device according to another embodiment of the present disclosure.

Reference numerals:
10 animal transportation device
20 animal carrier
22 box
24 pull-rod device
25 fixing bracket
26 box door
30, 30C fixing base
31, 31C support column
32, 32C connector
33 carrier mounting portion
33A, 33B, 33C fixing part
40 stabilizing webbing
42 fastener
200 animal carrier
220 box
221 top surface
221A upper opening
222 bottom surface
223-226 side surface
223A side opening
231-234 caster
231A~234A wheel seat
231B~234B groove
240 pull-rod device
241, 242 hollow tube
243 pull rod
244 grip portion
250 fixing bracket
251 rectangular border
252, 253 fixing rod
254 long tube
270 reinforcing side frame
281, 282 reinforcing rib
300 animal carrier
320 box
322 bottom surface
331 ridge
332 ridge
331A, 331B recess
332A, 332B recess
350 fixing bracket
353 fixing rod
370 reinforcing side frame
400 animal carrier
420 box
422 bottom surface
440 pull-rod device
450 fixing bracket
470 reinforcing side frame
500 animal carrier
520 box
522 bottom surface
540 pull rod
550 fixing bracket
551 long tube
552 short tube
553 long tube
553A, 553B avoidance portion
553C border portion
554 short tube
570 reinforcing side frame
600 animal carrier
620 box
621 top surface
621A upper opening
622 bottom surface
623~626 side surface
625A side opening
640 pull-rod device
700 animal carrier
720 box
722 bottom surface
731-734 caster
731A~734A wheel seat
731B~734B groove
740 pull-rod device
741, 742 hollow tube
743 pull rod
744 grip portion
750 fixing bracket
751 rectangular border
752, 753 fixing rod
754 long tube
756 short tube
770 short-side reinforcing side frame
780 long-side reinforcing side frame
800 animal carrier
820 box
822 bottom surface
840 pull-rod device
850 fixing bracket
853 fixing rod
870 short-side reinforcing side frame
880 long-side reinforcing side frame
900 animal carrier
920 box
922 bottom surface
950 fixing bracket
951 long tube
952 short tube
953A avoidance portion
953B, 953C border portion
954 short tube
970 short-side reinforcing side frame
980 long-side reinforcing side frame
1000 animal carrier
1020 box
1022 bottom surface
1040 pull-rod device
1044 grip portion
1045, 1046 branch tube
1045A, 1046A pivot portion
1050 fixing bracket
1070 short-side reinforcing side frame
1080 long-side reinforcing side frame
1100A, 1100B animal transportation device
1120A, 1120B animal carrier
1122A, 1122B bottom surface
1130A, 1130B fixing base
1131A, 1131B support column
1150A, 1150B webbing
1155A, 1155B connection member
1200A,1200B animal transportation device
1220A, 1220B animal carrier
1222A, 1222B bottom surface
1230A, 1230B fixing base
1250A, 1250B connection webbing
1251A, 1251B first webbing
1252A, 1252B second webbing
1255A, 1255B connection member

### DETAILED DESCRIPTION

Technical concepts and connotations of the present disclosure are described below with reference to the accompanying drawings and by way of exemplary embodiments. In the drawings or descriptions, the same or similar parts are represented by the same or corresponding element symbols; furthermore, the accompanying drawings are drawn to facilitate understanding, and dimensions and shapes of various elements in the accompanying drawings are not actual dimensions or proportional relationships of the elements.

In addition, the description of the accompanying drawings and embodiments below does not mean that the scope of implementation of the present disclosure is limited to a single embodiment; other embodiments are also possible by replacing some or all of the described or illustrated elements. Moreover, in cases where certain elements of the disclosed embodiments may adopt some or all of the known elements, only part of such known elements necessary for understanding the embodiments of the present disclosure is described, and detailed description of other parts of these known elements is omitted to avoid confusion of the concepts and embodiments of the present disclosure.

It should be noted that when used in the present disclosure, terms such as "front" and "rear" are defined based on a direction in which a vehicle is advancing; that is, in the context of the present disclosure, a direction close to a front of the vehicle or a front seat (i.e., a side relatively far away from a backrest of the vehicle's rear seat) is referred to as a "front side", while a direction close to a rear of the vehicle or the rear seat (i.e., a side relatively close to the backrest of the vehicle's rear seat) is referred to as a "rear side".

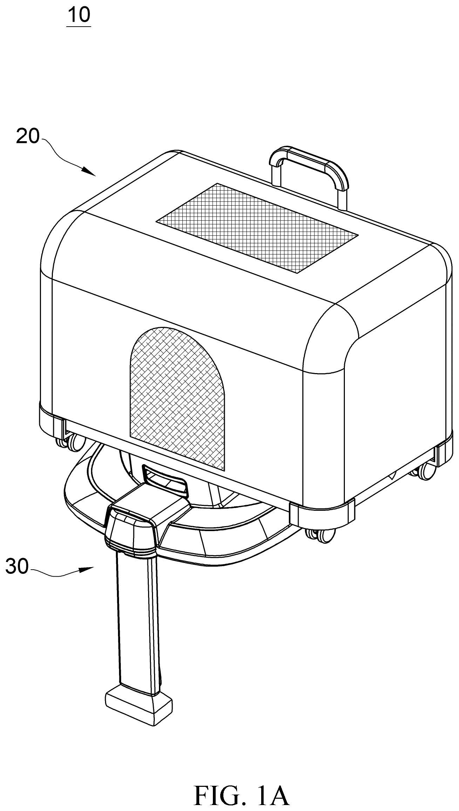

Referring to FIG. 1A, an animal transportation device 10 according to an embodiment of the present disclosure is illustrated. The animal transportation device 10 of this embodiment basically includes an animal carrier 20 and a fixing base 30 for a vehicle. The fixing base 30 is used to be mounted on the rear seat of the vehicle (not shown in this figure) and fixed inside the vehicle. The animal carrier 20 may be fixed on the fixing base 30 and secured to the rear seat of the vehicle through the fixing base 30.

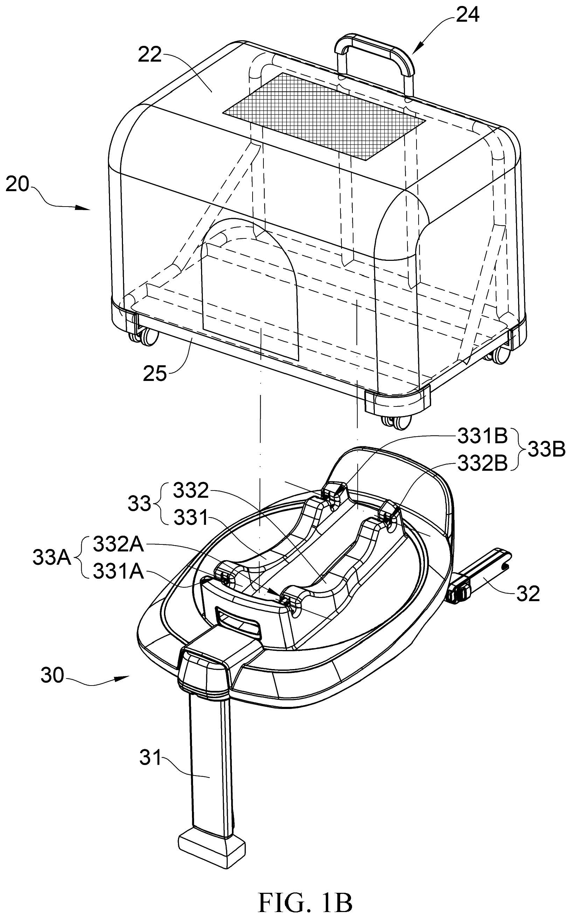

Referring to FIG. 1B, the animal carrier 20 and the fixing base 30 in the animal transportation device of this embodiment are further illustrated.

According to this embodiment, the animal carrier 20 is mainly in the form of a box 22 or a cage structure, in which an animal (or a pet) is placed for transportation. The animal carrier 20 is provided with a pull-rod device 24 on one side of its box 22. When the animal carrier 20 is not combined with the fixing base 30, a user (such as but not limited to an animal owner, a caregiver, etc.) may move the animal carrier 20 by pulling the pull-rod device 24 and using casters at a bottom of the box (not marked in the figure but further explained below). In this embodiment, the animal carrier 20 may be correspondingly fixed on the fixing base 30 through its bottom fixing bracket 25 (which will be further explained below), and the fixing base 30 is used to be mounted to the rear seat of the vehicle (not shown in this figure), whereby the animal carrier 20 is firmly fixed to the rear seat of the vehicle through the fixing base 30. As shown in FIG. 1B, the fixing base 30 includes a support column 31 and at least one pair of connectors 32 (only one of which is shown in the figure). The fixing base 30 is firmly connected to corresponding anchor points of the rear seat of the vehicle through the connectors 32 (such as but not limited to ISOFIX connectors) substantially arranged on both sides. The support column 31 is a telescopic structure that may extend to abut against a rear seat floor of the vehicle (not shown in this figure). By full contact of the support column 31 with the rear seat floor, the fixing base 30 may receive more stable and firm support.

The fixing base 30 includes a carrier mounting portion 33 for accommodating and fixing the animal carrier 20. In this embodiment, the carrier mounting portion 33 correspondingly engages with the bottom fixing bracket 25 of the animal carrier 20 to accommodate and fix the animal carrier 20. As shown in FIG. 1B, the carrier mounting portion 33 is mainly composed of ridges 331 and 332 that may form a contour corresponding to the bottom of the animal carrier 20, and recesses 331A and 331B are provided close to both ends of the ridge 331 while recesses 332A and 332B are provided close to both ends of the ridge 332. The recesses 331A and 332A together form a first fixing part 33A of the fixing base 30, and the recesses 331B and 332B together form a second fixing part 33B of the fixing base 30. The first fixing part 33A and the second fixing part 33B are used to accommodate and engage with corresponding structures on the bottom fixing bracket 25 of the animal carrier 20, such as a rectangular border or a fixing rod (not marked in the figure but further explained below), so that the animal carrier 20 engages with and is fixed to the fixing base 30.

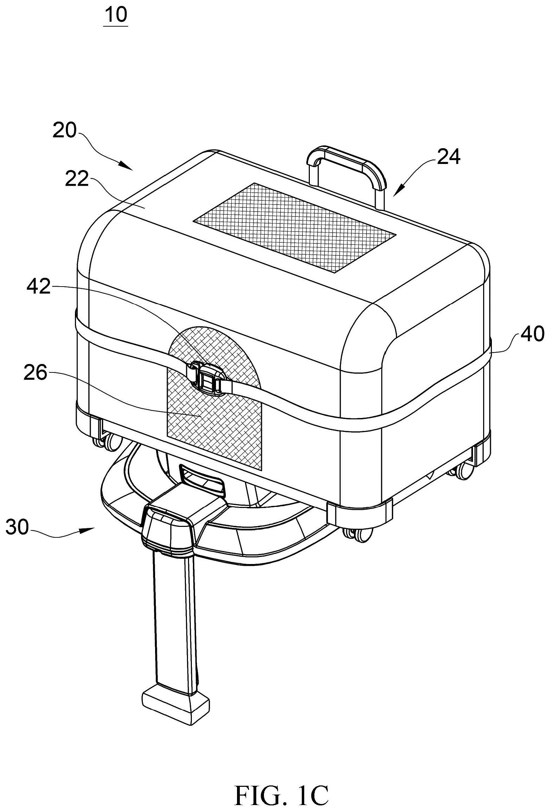

In this embodiment, the animal carrier 20 is fixed inside the vehicle in a direction such that the pull-rod device 24 is located on a rear side of the box 22 of the animal carrier 20 (i.e., a side close to the backrest of the rear seat of the vehicle when mounted inside the vehicle). Optionally, the animal transportation device 10 may further include a stabilizing webbing to further stabilize the box 22 of the animal carrier 20 during travel of the vehicle. As shown in FIG. 1C, a stabilizing webbing 40 wraps around a periphery of the box 22 and the pull-rod device 24 of the carrier 20, and tightens the box 22 and the pull-rod device 24 together to prevent the box 22 from shaking during movement and causing a box door 26 to open or even causing the box 22 to detach from the pull-rod device 24. Alternatively, the stabilizing webbing 40 may only wrap around and tighten the box 22, i.e., passing through a gap between the pull-rod device 24 and the rear side of the box 22 to wrap around the periphery of the box 22, to prevent the box door 26 from opening due to the shaking of the box 22. In this embodiment, the stabilizing webbing 40 may be, for example, a non-elastic webbing with a complementary fastener 42 at each of both ends for connection. By selecting an appropriate type of the fastener 42 (such as using a ladder buckle, an adjustable buckle, etc.), a length of the stabilizing webbing 40 may be adjusted to appropriately tighten the box 22 (or the box 22 and the pull-rod device 24), so as to stabilize the box 22 and prevent the box door 26 from opening due to shaking during travel of the vehicle. Alternatively, the stabilizing webbing 40 may also be a closed elastic webbing, and the elasticity of the elastic webbing may be used to appropriately tighten the box 22 (or the box 22 and the pull-rod device 24), so as to stabilize the box 22 and prevent the box door 26 from shaking or even opening during travel of the vehicle.

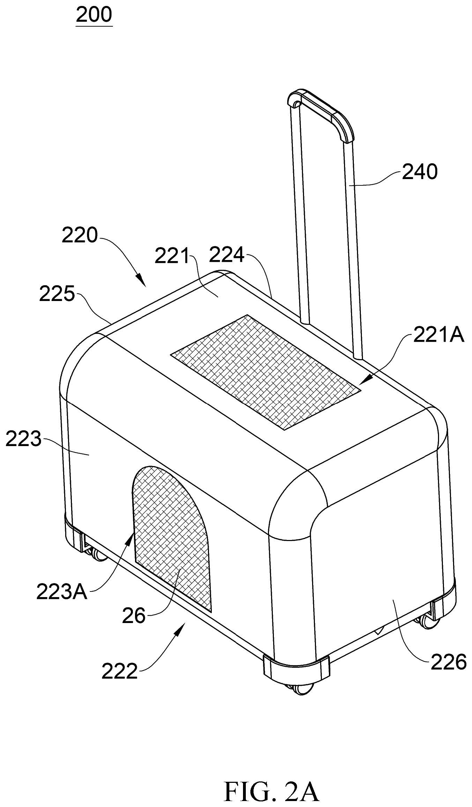

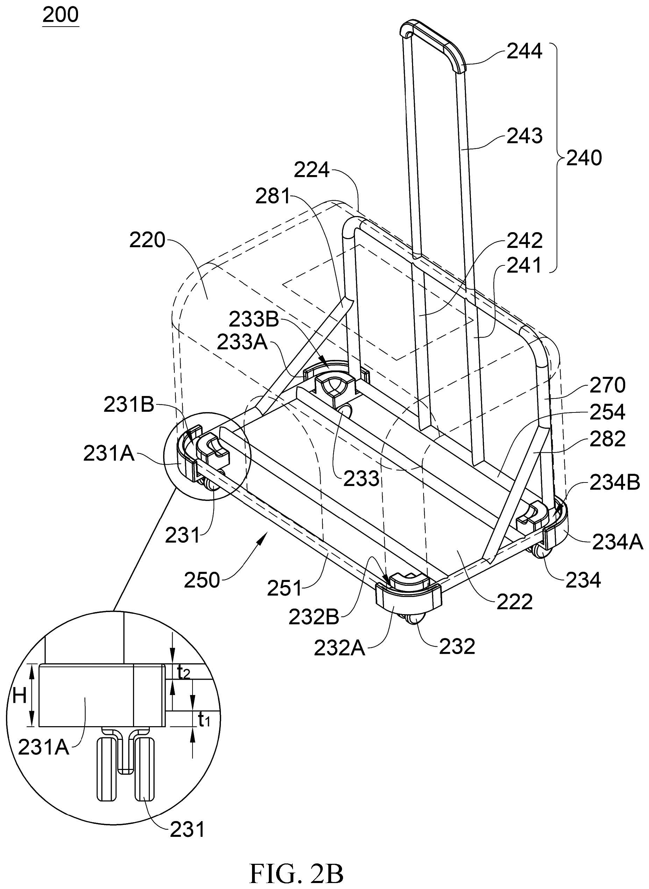

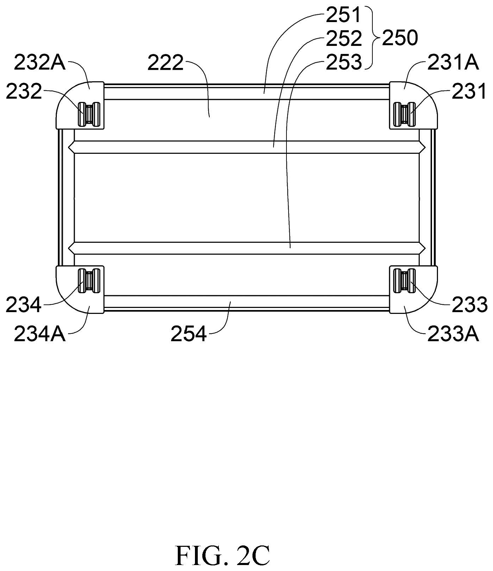

Referring to FIGS. 2A to 2C, an animal carrier 200 according to an embodiment of the present disclosure is illustrated, in which FIGS. 2A and 2B are top perspective views of the animal carrier 200 of this embodiment, and FIG. 2C illustrates a bottom fixing bracket 250 of the animal carrier 200 of this embodiment by a bottom plan view.

As shown in FIG. 2A, the animal carrier 200 mainly exhibits a box or cage structure for an animal (or a pet) to be placed inside for transportation. In detail, a box 220 of the animal carrier 200 is formed by connecting opposing top and bottom surfaces 221 and 222, opposing first and second side surfaces 223 and 224, and opposing third and fourth side surfaces 225 and 226. In this embodiment, the first side surface 223 and the second side surface 224 are, for example, long side surfaces, while the third side surface 225 and the fourth side surface 226 are, for example, short side surfaces. An interior of the box 220 forms a closed animal receiving space for the animal to be accommodated therein. According to practical application requirements, there may be at least one opening in the box 220 that may be closed by a box door 26 and allow the animal to enter and exit. For example, an upper opening 221A may be provided in the top surface 221 of the box 220, or a side opening 223A may be provided in the long side surface 223 (or the short side surface 225 or the short side surface 226) of the box 220, or both exist. It should be noted that both either the upper opening 221A or the side opening 223A may be designed in a closable manner by being provided with a box door, such as a door panel or a door piece (e.g., the box door 26 shown in FIG. 2A). The box door 26 closes after the animal enters the box 220 to prevent the animal from leaving or moving out of the box 220. As shown in FIGS. 2B and 2C, the animal carrier 200 is provided with casters 231 to 234 at four corners of the bottom surface 222 of the box 220. The casters 231 to 234 are mounted on mounting surfaces (i.e., surfaces away from the box 220) of their respective wheel seats 231A to 234A, and the wheel seats 231A to 234A are connected to the four corners of the bottom surface 222 to fix the respective casters 231 to 234. The wheel seats 231A to 234A are provided with grooves 231B to 234B on their respective sides facing the box 220 to be connected to the bottom fixing bracket 250 (which will be further explained below).

As shown in FIGS. 2B and 2C, the animal carrier 200 of this embodiment is provided with a pull-rod device 240 on a rear side of the box 220 (a side relatively close to the backrest of the rear seat of the vehicle, i.e., the second side surface or long side surface 224 in this embodiment) for the user to grip and pull, so as to facilitate the pulling and transportation of the animal carrier 200 when walking under the action of the casters 231 to 234. The bottom surface 222 of the box 220 is provided with the bottom fixing bracket 250 integrated therewith, to be combined with a fixing base for the vehicle (e.g., the fixing base 30 shown in FIGS. 1A to 1C), thereby allowing the animal carrier 200 to be mounted and fixed inside the vehicle.

According to this embodiment, the material of the box 220 of the animal carrier 200 may be, for example, hard plastic. In other words, in this embodiment, as shown in FIG. 2A, the top surface 221, the bottom surface 222, the first and second side surfaces (long side surfaces) 223 and 224, the third and fourth side surfaces (short side surfaces) 225 and 226, and the box door 26 of the box 220 are all made of suitable hard plastic materials, but the present disclosure is not limited thereto; optionally, soft fabrics (e.g., canvas, high weight non-woven fabrics, etc.) may also be used as the material for the box, and designs such as zippers, hook-and-loop fasteners, and press-and-seal closures may be used to close the opening in the top surface or the side surface of the box.

In this embodiment, the pull-rod device 240 and the bottom fixing bracket 250 of the animal carrier 200 may be made of, for example, metal materials. As shown in FIGS. 2B and 2C, the bottom fixing bracket 250 is connected to the bottom surface 222 of the box 220. The bottom fixing bracket 250 and the pull-rod device 240 of the animal carrier 200 are integrated with a reinforcing side frame 270 (which will be further explained below) also made of a metal material; for example, they are fixed and connected to each other by welding. In detail, as shown in FIG. 2C, the bottom fixing bracket 250 is composed of a rectangular border 251 formed by enclosure and connection of four metal tubes (a pair of opposing long tubes and a pair of opposing short tubes), and two fixing rods 252 and 253 that bridge and are welded to the opposing short tubes. The shape of the rectangular border 251 corresponds to the bottom surface 222 of the box 220; in other words, the metal tubes enclosing the bottom rectangular border 251 correspond to the first side surface 223, the second side surface 224, the third side surface 225, and the fourth side surface 226, respectively. The bottom fixing bracket 250 is fixed to the bottom surface 222 of the box 220 by embedding or snap-fitting; for example, it is embedded into the grooves 231B to 234B of the four wheel seats 231A to 234A of the box 220, so as to be integrated with the box 220 and not be separated from the box 220.

As shown in FIG. 2B, in this embodiment, each of the wheel seats 231A to 234A has a height H, and its bottom edge has a thickness t1. The height H is greater than a sum of a diameter of the tube forming the rectangular border 251 and the thickness t1 of the bottom edge. As a result, when the tube is embedded in the groove (e.g., the groove 231B) of the wheel seat (e.g., the wheel seat 231A), there is a gap t2 between the rectangular border 251 connected to the wheel seats 231A to 234A through the grooves 231B to 234B and a lower edge of the bottom surface 222 of the box 220, so that there is also a gap t2 of the same size between the fixing rods 252 and 253 and the lower edge of the bottom surface 222 of the box 220. When the bottom fixing bracket 250 is connected to the first fixing part and the second fixing part of the carrier mounting portion of the fixing base through its fixing rods 252 and 253, the gap t2 provides a connection space for the fixing rods 252 and 253 to connect the first fixing part and the second fixing part.

In this embodiment, as shown in FIG. 2B, the second side surface 224 of the box 220 (i.e., the long side surface provided with the pull-rod device 240) also includes the reinforcing side frame 270 fixedly connected thereto. A contour of the reinforcing side frame 270 corresponds to the second side surface (the long side surface) 224, and the reinforcing side frame includes a rectangular border formed by enclosure and connection of four metal tubes (a pair of opposing top and bottom tubes and a pair of opposing side tubes, in which the bottom tube may be one of the long tubes of the rectangular border 251 of the bottom fixing bracket 250), and two hollow tubes 241 and 242 that bridge and are fixed to the two opposing top and bottom tubes. In this embodiment, a pull rod 243 of the pull-rod device 240 is, for example, a U-shaped tube with a diameter smaller than a diameter of the hollow tubes 241 and 242, so that the pull rod may be fitted into the hollow tubes 241 and 242 to form a telescopic configuration. In other words, the hollow tubes 241 and 242 not only form a part of the reinforcing side frame 270 to provide support strength, but also form a part of the pull-rod device 240 to form the telescopic pull-rod device 240. Hence, the user may apply force to a grip portion 244 of the pull-rod device 240 to appropriately elongate (e.g., during walking) or retract (e.g., when the animal carrier 200 is fixed to the fixing base inside the vehicle) the pull-rod device 240 in different usage scenarios.

In this embodiment, as shown in FIG. 2B, the reinforcing side frame 270 is connected to the bottom fixing bracket 250 on one side and is substantially perpendicular to the bottom fixing bracket. As described above, the reinforcing side frame 270 may share a long tube (i.e., the long tube 254 shown in FIG. 2B) with the rectangular border 251 of the bottom fixing bracket 250 to form a connection side. Preferably, the animal carrier 200 further includes two reinforcing ribs 281, 282 respectively connecting the short tube of the rectangular border 251 of the bottom fixing bracket 250 with the corresponding side tube of the reinforcing side frame 270 to enhance the overall structure of the carrier.

As described above, in this embodiment, the bottom fixing bracket 250, the reinforcing side frame 270, and the reinforcing ribs 281, 282 may all be made of, for example, metal and fixed correspondingly by welding, and they may be connected to the bottom surface 222 and the long side surface 224 of the hard box 220 by sleeve-fitting, embedding, or snap-fitting. Preferably, the bottom fixing bracket 250, the reinforcing side frame 270, and the reinforcing ribs 281 and 282 are embedded in the bottom surface 222, the long side surface 224, and the short side surfaces 225 and 226 of the box 220, respectively, or are encased therein by means of, for example, plastic molding, so as to form an integrated structure with the box 220.

In other words, the box 220 of the animal carrier 200 in this embodiment is fixedly and inseparably connected to the bottom fixing bracket 250, the reinforcing side frame 270, and the pull-rod device 240, and engages with the fixing parts (e.g., the first fixing part 33A and the second fixing part 33B shown in FIG. 1B) of the fixing base (e.g., the fixing base 30 shown in FIGS. 1A to 1C) mounted inside the vehicle by using the fixing rods 252 and 253 of the bottom fixing bracket 250, so as to be stably fixed inside the vehicle.

In response to different forms of the fixing base, the present disclosure further proposes different designs for the bottom fixing bracket to match the corresponding fixing base.

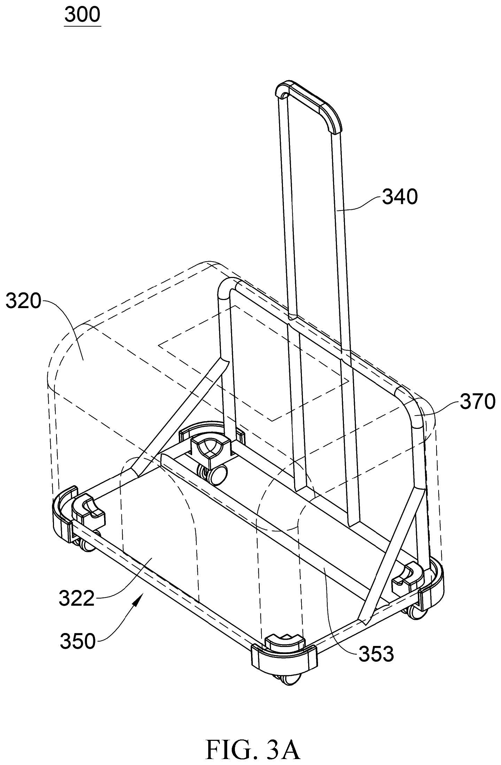

Referring to FIGS. 3A to 3B, an animal carrier 300 according to an embodiment of the present disclosure is illustrated. The animal carrier 300 basically has the same configuration and structure as the above animal carrier 200, and the materials and connection methods of its various components are also the same as those of the above animal carrier 200. However, the difference is that in this embodiment, a bottom fixing bracket 350 on a bottom surface 322 of a box 320 of the animal carrier 300 only has a single fixing rod 353, forming a single-fixing-rod-type fixing bracket. Similarly, the box 320 of the animal carrier 300 in this embodiment is fixedly and inseparably connected to the bottom fixing bracket 350, a reinforcing side frame 370, and a pull-rod device 340, and engages with the fixing part (e.g., the second fixing part 33B shown in FIG. 1B) of the fixing base by using the single fixing rod 353 of the bottom fixing bracket 350, so as to be stably fixed inside the vehicle.

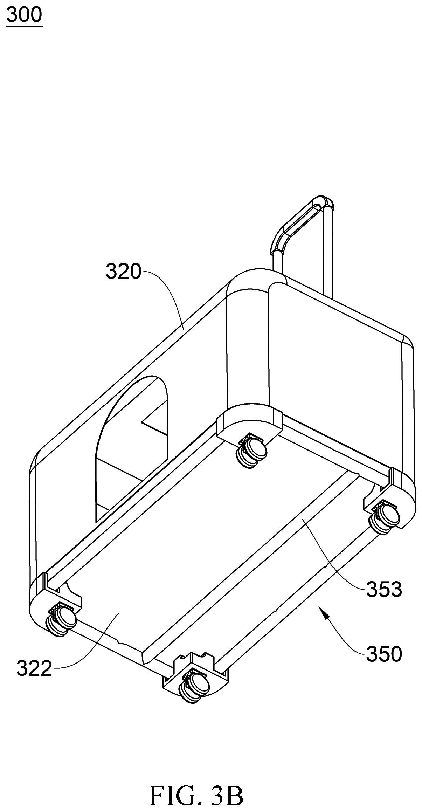

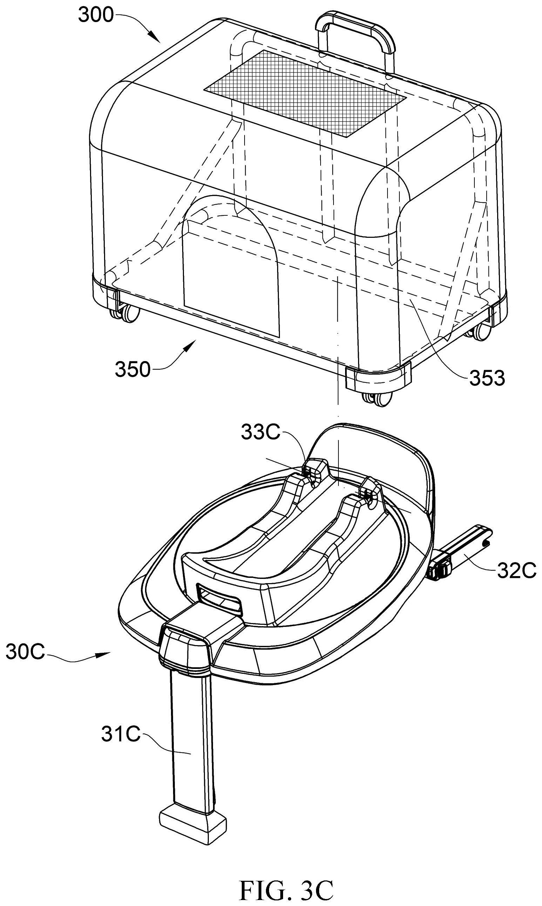

Alternatively, as shown in FIG. 3C, the animal carrier 300 of FIGS. 3A and 3B may also use a single fixing rod 353 of the bottom fixing bracket 350 to engage with a fixing part 33C of a single-groove-type fixing base 30C. In this embodiment, the "single-groove-type fixing base" 30C means that there is only a single fixing part 33C on a ridge of the carrier mounting portion corresponding to the contour of the bottom fixing bracket 350. The fixing base 30C is firmly connected to corresponding anchor points of the rear seat of the vehicle through connectors 32C (such as but not limited to ISOFIX connectors) substantially arranged on both sides, and extends to abut against the rear seat floor of the vehicle (not shown in this figure) through a telescopic support column 31C. Through full contact of the support column 31C with the rear seat floor, the fixing base 30C may be supported more stably and firmly. Except for the fixing part 33C, other structures of the fixing base 30C are the same as those of the fixing base 30 shown in FIG. 1C.

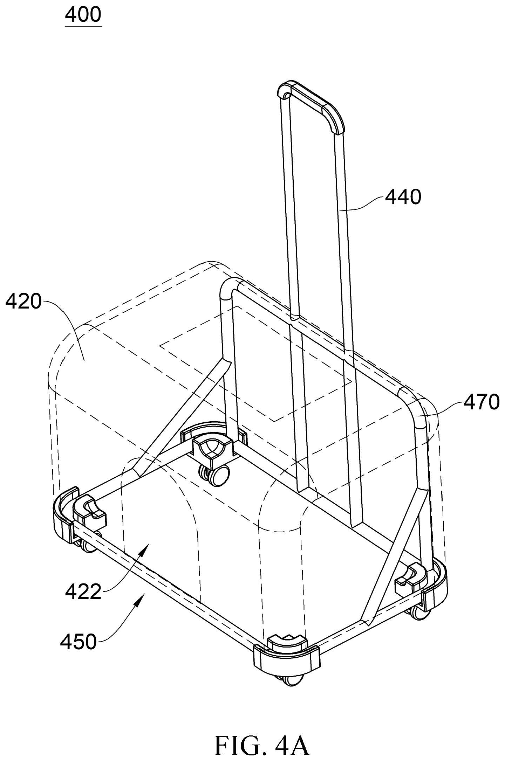

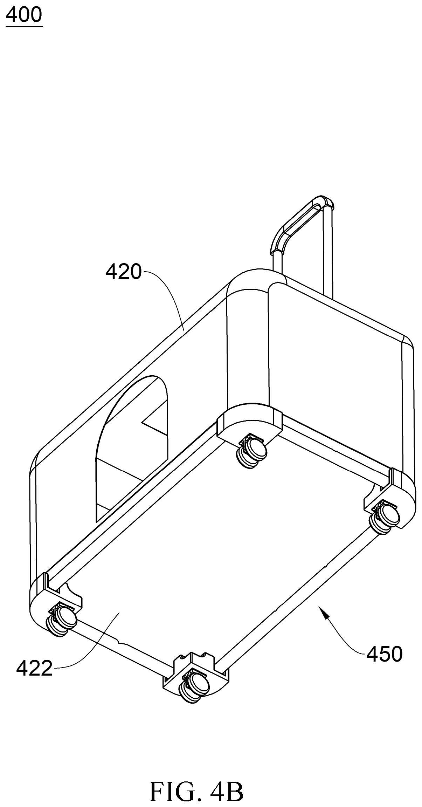

Referring to FIGS. 4A to 4B, an animal carrier 400 according to an embodiment of the present disclosure is illustrated. The animal carrier 400 basically has the same configuration and structure as the above animal carriers 200 and 300, and the materials and connection methods of its various components are also the same as those of the above animal carriers 200 and 300. However, the difference is that in this embodiment, a bottom fixing bracket 450 on a bottom surface 422 of a box 420 of the animal carrier 400 is not provided with any additional fixing rod. The bottom fixing bracket 450 itself exhibits a structure of a rectangular border, and is directly snap-fit with and connected to fixing parts of a corresponding fixing base by using long tubes that constitute the rectangular border. Similarly, the box 420 of the animal carrier 400 in this embodiment is fixedly and inseparably connected to the bottom fixing bracket 450, a reinforcing side frame 470, and a pull-rod device 440, and engages with the fixing part (e.g., the second fixing part 33B shown in FIG. 1B) of the fixing base by using long tubes that constitute the bottom fixing bracket 450, so as to be stably fixed inside the vehicle. Optionally, the animal carrier 400 in this embodiment may also engages with the fixing part (e.g., the fixing part 33C shown in FIG. 3C) of the fixing base using only one of the two long tubes that constitute the bottom fixing bracket 450.

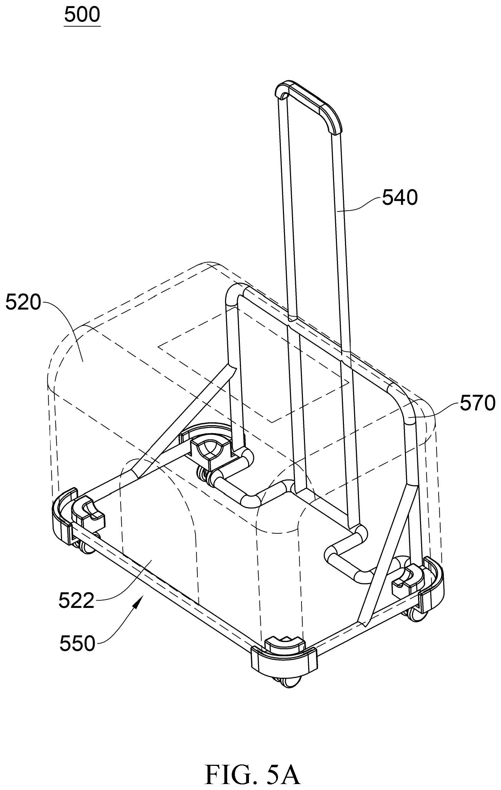

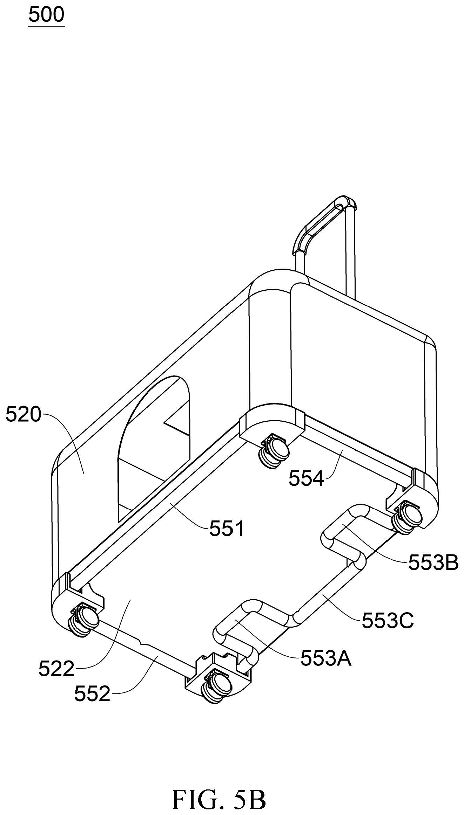

Referring to FIGS. 5A to 5B, an animal carrier 500 according to an embodiment of the present disclosure is illustrated. The animal carrier 500 basically has the same configuration and structure as the above animal carriers 200, 300, and 400, and the materials and connection methods of its various components are also the same as those of the above animal carriers 200, 300, and 400. However, the difference is that in this embodiment, a bottom fixing bracket 550 on a bottom surface 522 of a box 520 of the animal carrier 500 is not provided with any additional fixing rod. The bottom fixing bracket 550 itself exhibits a double-concave-type structure. In detail, as shown in FIG. 5B, the bottom fixing bracket 550 is a metal frame formed by sequentially connecting a long tube 551, a short tube 552, a long tube 553, and a short tube 554. The long tube 553 exhibits a bent structure and forms avoidance portions 553A and 553B (as shown in FIG. 5B) on the bottom surface 522 of the box 520 towards the inside, to be snap-fit with and connected to fixing parts of a corresponding fixing base. In this embodiment, the long tube 553 exhibits the bent structure and may be snap-fit with and connected to the fixing parts of the fixing base through the avoidance portions 553A and 553B, so that the animal carrier 500 is positioned in an appropriate location relative to the fixing base. At the same time, a border portion 553C of the long tube 553 other than the avoidance portions 553A and 553B may abut against an outer edge of the bottom surface 522 to provide effective support for the box 26. Specifically, a metal block (not shown in this figure) may be fitted over the border portion 553C and indirectly rest against the bottom surface 522 by one side of the metal block resting against the bottom surface 522. Similarly, the box 520 of the animal carrier 500 in this embodiment is fixedly and inseparably connected to the bottom fixing bracket 550, a reinforcing side frame 570, and a pull-rod device 540, and engages with the fixing part (e.g., the fixing part 33C shown in FIG. 3C) of the fixing base by using the bottom fixing bracket 550, so as to be stably fixed inside the vehicle.

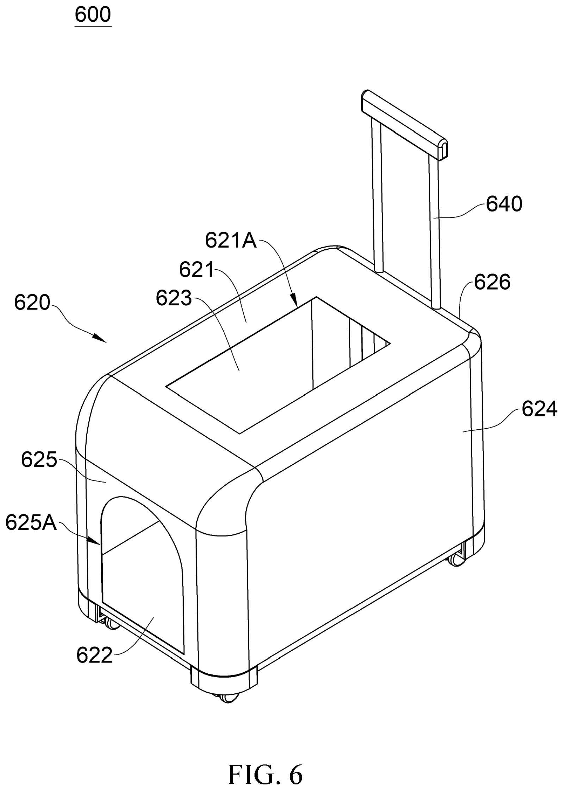

Referring to FIG. 6, an animal carrier 600 according to an embodiment of the present disclosure is illustrated. The animal carrier 600 basically has the same structure as the above animal carrier 200, and the materials and connection methods of its various components are also the same as those of the above animal carrier 200. However, the difference is that in this embodiment, the animal carrier 600 has a different configuration direction from the above animal carrier 200.

As shown in FIG. 6, in this embodiment, the animal carrier 600 includes a box 620 formed by connecting opposing top and bottom surfaces 621 and 622, opposing first and second side surfaces 623 and 624, and opposing third and fourth side surfaces 625 and 626. An interior of the box 620 forms a closed animal receiving space for the animal to be accommodated therein. For example, in this embodiment, the first side surface 623 and the second side surface 624 are a pair of opposing long side surfaces, while the third side surface 625 and the fourth side surface 626 are a pair of opposing short side surfaces. According to practical application requirements, there is at least one opening in the box 620 that may be closed by a box door (e.g., the door 26 shown in FIG. 1C, which is not shown in this figure) and allow the animal to enter and exit. In this embodiment, an upper opening 621A is provided in the top surface 621 of the box 620, and a side opening 625A is provided in the short side surface 625 of a front side of the box 620 (i.e., a side away from the backrest of the rear seat of the vehicle when mounted in the vehicle). In this embodiment, each of the upper opening 621A and the side opening 625A is designed in a closable manner by being provided with the box door, such as a door panel or a door piece (not shown in this figure) that may close the opening after the animal enters the box 620 to prevent the animal from leaving or moving out of the box 620.

Although not shown in this figure, the animal carrier 600 of this embodiment may further include a stabilizing webbing (e.g., the stabilizing webbing 40 shown in FIG. 1C) to tighten the box 622, or to tighten the box 622 together with the box door and a pull-rod device 640, so as to further stabilize the box 622 and the box door of the animal carrier 600 during travel of the vehicle, preventing the box door from shaking or even opening during travel of the vehicle.

Similarly, in this embodiment, the animal carrier 600 may be correspondingly fixed to a fixing base (not shown in this figure, but such as the fixing base 30 shown in FIG. 1A) using a bottom fixing bracket (not shown in this figure but further explained below) integrated with the bottom surface 622 of the box 620, and the fixing base is used for installation at the rear seat of the vehicle (not shown in this figure). Hence, the animal carrier 600 is firmly fixed to the rear seat of the vehicle through the fixing base.

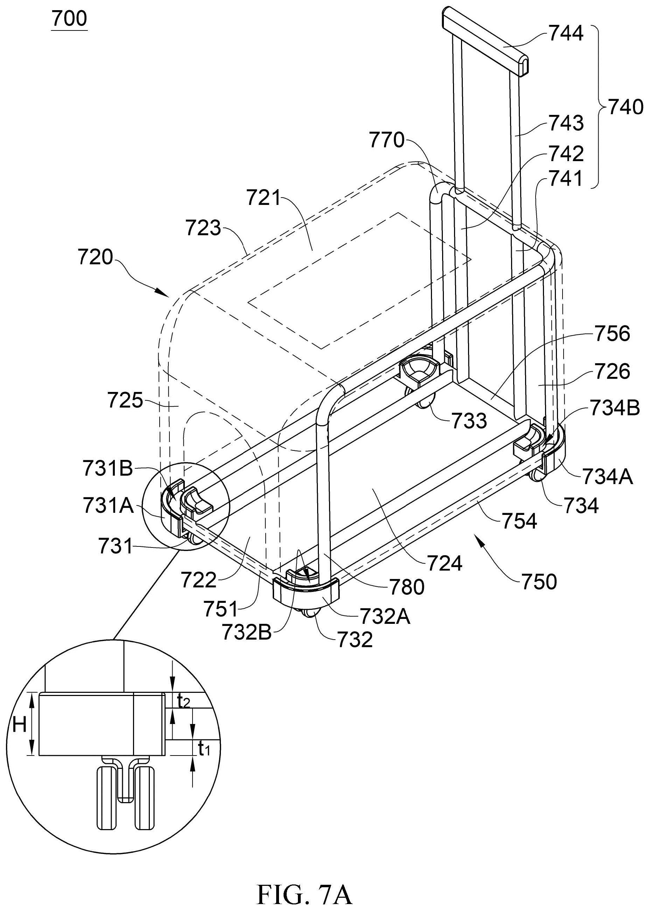

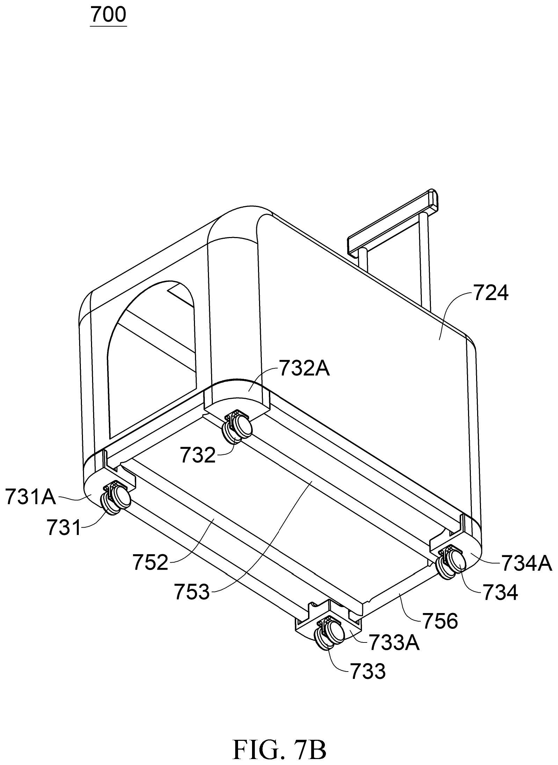

Referring to FIGS. 7A and 7B, an animal carrier 700 according to an embodiment of the present disclosure is illustrated. As shown in FIG. 7A, the animal carrier 700 is provided with casters 731 to 734 at four corners of a bottom surface 722 of a box 720. The casters 731 to 734 are mounted on mounting surfaces (i.e., surfaces away from the box 720) of their respective wheel seats 731A to 734A, and the wheel seats 731A to 734A are connected to the four corners of the bottom surface 722 to fix the respective casters 731 to 734. The wheel seats 731A to 734A are provided with grooves 731B to 734B on their respective sides facing the box 720 to be connected to a bottom fixing bracket 750 (which will be further explained below).

The difference from the above animal carriers 200 to 500 is that in this embodiment, a pull-rod device 740 is provided on a fourth side surface (a short side surface) 726 of the box 720 of the animal carrier 700 for the user to grip and pull, so as to facilitate the pulling and transportation of the animal carrier 700 during walking under the action of the casters 731 to 734. The bottom surface 722 of the box 720 is provided with the bottom fixing bracket 750 integrated therewith, to be combined with a fixing base (e.g., the fixing base 30 shown in FIGS. 1A to 1C), thereby accommodating and fixing the animal carrier 700. When the animal carrier 700 is combined with the fixing base, the difference from the above animal carriers 200 to 500 is that the pull-rod device 740 of this embodiment is not close to a backrest of a vehicle seat (not shown in this figure) as shown in FIG. 1A, but on another side roughly perpendicular to the backrest. In this way, the user may grip the pull-rod device 740 without being obstructed by the backrest of the seat, which may help the user move the animal carrier 700.

In this embodiment, the pull-rod device 740 and the bottom fixing bracket 750 of the animal carrier 700 may be made of, for example, metal. As shown in FIGS. 7A and 7B, the bottom fixing bracket 750 is connected to the bottom surface 722 of the box 720. The bottom fixing bracket 750 and the pull-rod device 740 of the animal carrier are integrated with a short-side reinforcing side frame 770 also made of metal; for example, they are fixed and connected to each other by welding. In detail, the bottom fixing bracket 750 is composed of a rectangular border 751 formed by enclosure and connection of four metal tubes (a pair of opposing long tubes and a pair of opposing short tubes), and two fixing rods 752 and 753 (marked in FIG. 7B) that bridge and are welded to the opposing short tubes. The bottom fixing bracket 750 is embedded or snap-fit with the bottom surface 722 of the box 720; for example, it is embedded into the grooves 731B to 734B of the four wheel seats 731A to 734A of the box 720, so as to be integrated with the box 720.

As shown in FIG. 7A, in this embodiment, each of the wheel seats 731A to 734A has a height H, and its bottom edge has a thickness t1. As mentioned above, since the height H is greater than the thickness t1 of the bottom edge of the wheel seat and a diameter of the long tube of the border, when the tube is embedded in the groove (e.g., the groove 731B) of the wheel seat (e.g., the wheel seat 731A), the height H may create a gap t2 between the rectangular border 751 connected to the wheel seats 731A to 734A through the grooves 731B to 734B and a lower edge of the bottom surface 722 of the box 720. Consequently, there is also a gap t2 of the same size between the fixing rods 752 and 753 and the lower edge of the bottom surface 722 of the box 720. When the bottom fixing bracket 750 is mounted to corresponding fixing parts of the carrier mounting portion of the fixing base through its fixing rods 752 and 753, the gap t2 provides a connection space for the fixing rods 752 and 753 to connect the fixing parts.

In this embodiment, in addition to the short-side reinforcing side frame 770 integrated with the short side surface 726 that is provided with the pull-rod device 740, the animal carrier 700 also includes a long-side reinforcing side frame 780 disposed at and fixedly combined with one of the long side surfaces (e.g., the long side surface 724) of the box 720. In this embodiment, contours of the short-side reinforcing side frame 770 and the long-side reinforcing side frame 780 correspond to the short side surface 726 and the long side surface 724 of the box 720, respectively. The short-side reinforcing side frame 770 is fixedly connected to the short side of the rectangular border 751 of the bottom fixing bracket 750 (for example, by a common short tube 756), and is substantially perpendicular to the bottom fixing bracket 750. The short-side reinforcing side frame 770 includes a pair of two hollow tubes 741 and 742 that bridge and are fixed between the common short tube 756 shared by the bottom fixing bracket 750 and the short-side reinforcing side frame 770 and another short tube of the short-side reinforcing side frame 770. In this embodiment, a pull rod 743 of the pull-rod device 740 is, for example, a U-shaped tube with a diameter smaller than a diameter of the hollow tubes 741 and 742, so that the pull rod may be fitted into the hollow tubes 741 and 742 to form a telescopic configuration. In other words, the hollow tubes 741 and 742 not only form a part of the short-side reinforcing side frame 770 to provide support strength, but also form a part of the pull-rod device 740 to form the telescopic pull-rod device 740. Hence, the user may apply force to a grip portion 744 of the pull-rod device 740 to appropriately elongate (e.g., during walking) or retract (e.g., when the animal carrier 700 is fixed to the fixing base inside the vehicle) the pull-rod device 740 in different usage scenarios. The long-side reinforcing side frame 780 is fixedly connected to the long side of the rectangular border 751 of the bottom fixing bracket 750 (for example, by a common long tube 754), and is substantially perpendicular to the bottom fixing bracket 750. In this embodiment, due to the further integration of the bottom fixing bracket 750 with the short-side reinforcing side frame 770 and the long-side reinforcing side frame 780, the overall structure of the carrier may be further strengthened. In addition, since the long-side reinforcing side frame 780 may abut against the backrest of the vehicle seat when the animal carrier 700 is combined with the fixing base of the vehicle, the long-side reinforcing side frame 780 may absorb impact force in the case of impact on the vehicle, thereby protecting the pet inside the animal carrier 700.

As described above, in this embodiment, the bottom fixing bracket 750, the short-side reinforcing side frame 770, and the long-side reinforcing side frame 780 may all be made of, for example, metal and fixed correspondingly by welding, and they may be connected to the bottom surface 722, the short side surface 726, and the long side surface 724 of the hard box 720 by embedding, or snap-fitting, thereby forming an integrated and inseparable structure. Preferably, the bottom fixing bracket 750, the reinforcing side frame 770, and the long-side reinforcing side frame 780 are embedded in the bottom surface 722, the short side surface 726, and the long side surface 724 of the box 720, respectively, or encased therein by means of, for example, plastic molding, to form an integrated structure with the box 720.

As mentioned above, in response to different forms of the fixing base, the present disclosure further proposes different designs for the bottom fixing bracket to match the corresponding fixing base.

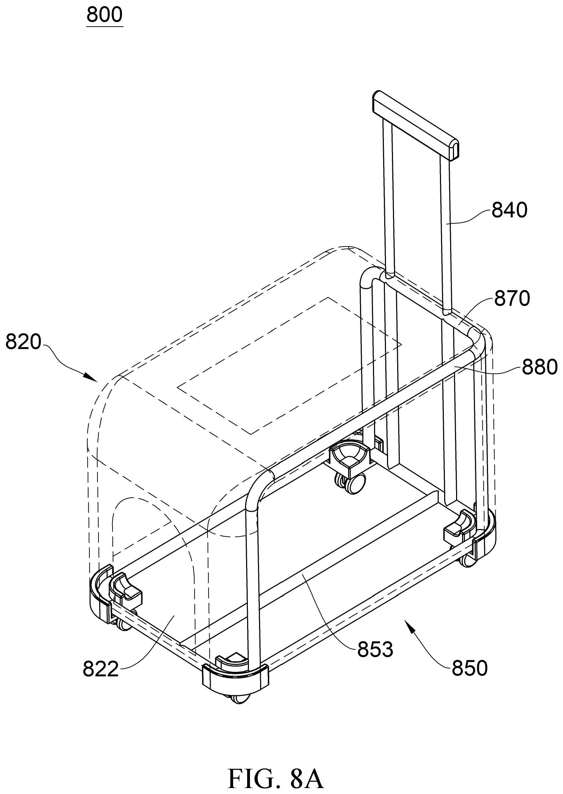

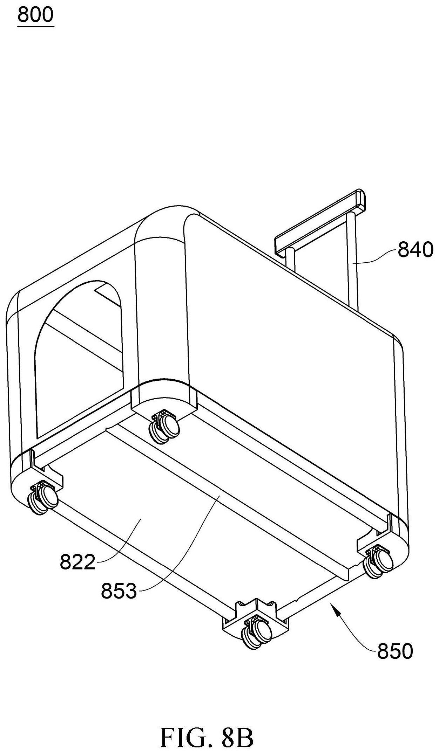

Referring to FIGS. 8A to 8B, an animal carrier 800 according to an embodiment of the present disclosure is illustrated. The animal carrier 800 basically has the same configuration and structure as the above animal carrier 700, and the materials and connection methods of its various components are also the same as those of the above animal carrier 700. However, the difference is that in this embodiment, a bottom fixing bracket 850 on a bottom surface 822 of a box 820 of the animal carrier 800 only has a single fixing rod 853, forming a single-fixing-rod-type fixing bracket. Similarly, the box 820 of the animal carrier 800 in this embodiment is fixedly and inseparably connected to the bottom fixing bracket 850, a pull-rod device 840, a short-side reinforcing side frame 870, and a long-side reinforcing side frame 880, and engages with the fixing part (e.g., the second fixing part 33C shown in FIG. 3C) of the fixing base by using the single fixing rod 853 of the bottom fixing bracket 850, so as to be stably fixed inside the vehicle.

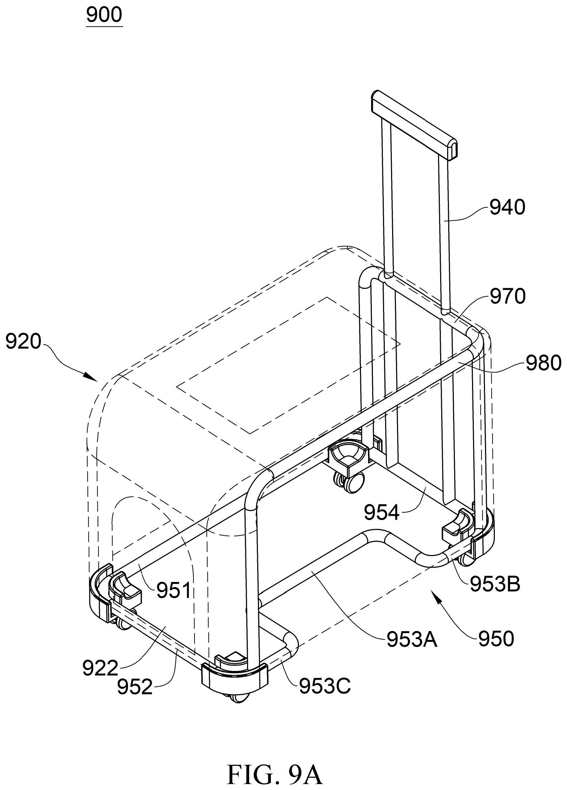

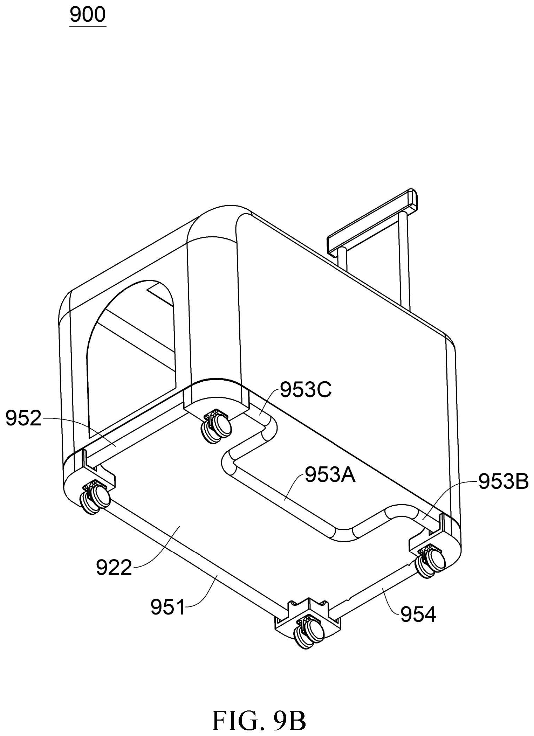

Referring to FIGS. 9A to 9B, an animal carrier 900 according to an embodiment of the present disclosure is illustrated. The animal carrier 900 basically has the same configuration and structure as the above animal carriers 700 and 800, and the materials and connection methods of its various components are also the same as those of the above animal carriers 700 and 800. However, the difference is that in this embodiment, a bottom fixing bracket 950 on a bottom surface 922 of a box 920 of the animal carrier 900 is not provided with any additional fixing rod. The bottom fixing bracket 950 itself exhibits a concave-shaped structure. In detail, as shown in FIG. 9A, the bottom fixing bracket 950 is a metal frame formed by connecting a long tube 951, a short tube 952, a long tube 953, and a short tube 954. The long tube 953 exhibits a bent structure and forms an avoidance portion 953A on the bottom surface 922 of the box 920, to be snap-fit with and connected to a fixing part of a corresponding fixing base. In this embodiment, the long tube 953 exhibits the bent structure and may be snap-fit with and connected to the fixing part of the fixing base through the avoidance portion 953A, so that the animal carrier 900 is positioned in an appropriate location relative to the fixing base. At the same time, border portions 953B and 953C of the long tube 953 other than the avoidance portion 953A may abut against an outer edge of the bottom surface 922 to provide effective support for the box 26. Specifically, metal blocks (not shown in this figure) may be fitted over the border portions 953B and 953C and indirectly rest against the bottom surface 922 by one side of each metal block resting against the bottom surface 922.

Similarly, the box 920 of the animal carrier 900 in this embodiment is fixedly and inseparably connected to the bottom fixing bracket 950, a pull-rod device 940, a short-side reinforcing side frame 970, and a long-side reinforcing side frame 980, and engages with the fixing part (e.g., the second fixing part 33B shown in FIG. 1B) of the fixing base by using the bottom fixing bracket 950, so as to be stably fixed inside the vehicle.

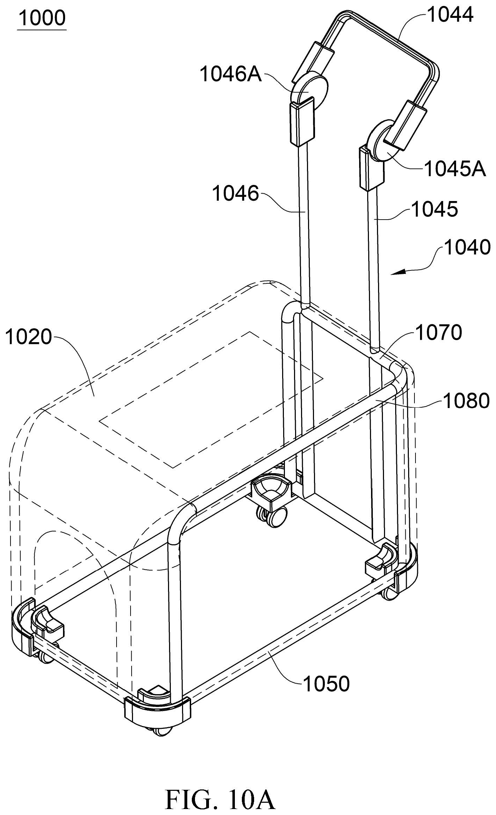

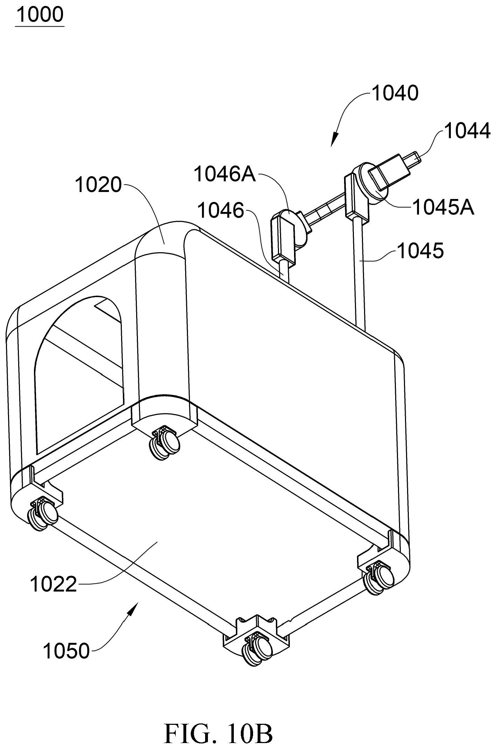

Referring to FIGS. 10A to 10B, an animal carrier 1000 according to an embodiment of the present disclosure is illustrated. The animal carrier 1000 basically has the same configuration and structure as the above animal carriers 700, 800, and 900, and the materials and connection methods of its various components are also the same as those of the above animal carriers 700, 800, and 900. However, the difference is that in this embodiment, a bottom fixing bracket 1050 on a bottom surface 1022 of a box 1020 of the animal carrier 1000 is not provided with any additional fixing rod. The bottom fixing bracket 1050 itself exhibits a structure of a rectangular border, and is directly snap-fit with and connected to fixing parts of a corresponding fixing base by using long tubes that constitute the rectangular border. Similarly, the box 1020 of the animal carrier 1000 in this embodiment is fixedly and inseparably connected to the bottom fixing bracket 1050, a pull-rod device 1040, a short-side reinforcing side frame 1070, and a long-side reinforcing side frame 1080, and engages with the fixing part of the fixing base by using the bottom fixing bracket 1050, so as to be stably fixed inside the vehicle.

Optionally, in this embodiment, a grip portion 1044 of the pull-rod device 1040 is rotatably connected to ends of two branch tubes 1045 and 1046 of the pull-rod device 1040. In other words, the branch tubes 1045 and 1046 are connected to two ends of the U-shaped grip portion 1044 through pivot portions 1045A and 1046A, respectively, thereby adjusting the angle and orientation of the grip portion 1044 relative to the branch tubes 1045 and 1046, to provide the user with a more convenient and comfortable pulling experience. It should be understood that the pull-rod device 1040 with the pivot portions in this embodiment may replace the pull-rod device in each of the above embodiments.

As mentioned above, in the present disclosure, the animal carrier is fixedly mounted inside the vehicle by corresponding engagement between its bottom fixing bracket or fixing rod and the carrier mounting portion of the fixing base. According to the present disclosure, besides that the fixing base is firmly connected to the anchor points of the rear seat of the vehicle through the support column and at least one pair of connectors (such as but not limited to ISOFIX connectors), the fixing base may further include an anchoring device (Top Tether) to further secure the animal carrier to an anchor point (not shown in this figure) of the rear seat of the vehicle, as described below.

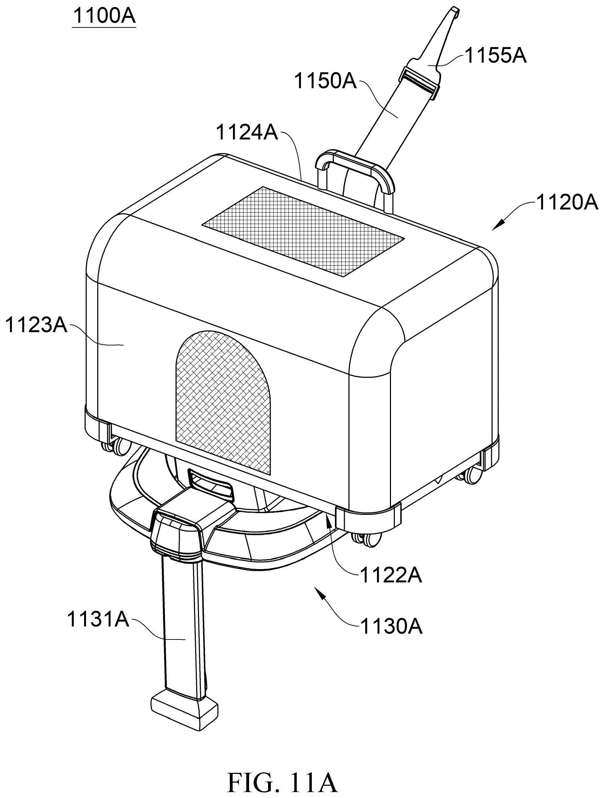

Referring to FIG. 11A, an animal transportation device 1100A according to an embodiment of the present disclosure is illustrated. The animal transportation device 1100A includes an animal carrier 1120A and a fixing base 1130A.

In this embodiment, the fixing base 1130A is connected to the rear seat floor of the vehicle through its support column 1131A, and is firmly connected to anchor points of the rear seat of the vehicle with at least one pair of connectors (not shown in this figure). As mentioned above, the animal carrier 1120A is correspondingly connected to the fixing base 1130A through a bottom fixing bracket (not marked in the figure) disposed on its bottom surface 1122A, so as to be mounted inside the vehicle. In this embodiment, the animal carrier 1120A further includes an anchoring device composed of a webbing 1150A and a connection member 1155A. One end of the webbing 1150A is fixed to the bottom surface 1122A of the box of the animal carrier 1120A close to a rear side (a side provided with a pull-rod device) or the bottom fixing bracket or the fixing base 1130A, while the other end thereof is connected to the connection member 1155A to be fixed to a corresponding fixing point (as an anchor point, not shown in this figure) above the rear seat of the vehicle or over the rear seat to the rear bottom. In an implementation where the webbing 1150A is fixedly connected to the bottom fixing bracket, the fixed connection may be realized by attaching a connection member such as a hook, a quick release buckle, a D-hook and a magnetic element to one end of the webbing, and connecting the webbing with the tube of the bottom fixing bracket through the connection member. This implementation allows the webbing to be detached from the bottom fixing bracket when the animal carrier is detached from the fixing base, achieving the technical effect of easy storage and convenient carrying.

In addition, only one set of the webbing 1150A and the connection member 1155A is provided in this embodiment, but the present disclosure is not limited thereto and may include more than one set of the webbing 1150A and the connection member 1155A, such as two sets, which may be symmetrically fixed to the bottom surface 1122A of the box or the bottom fixing bracket or the fixing base 1130A.

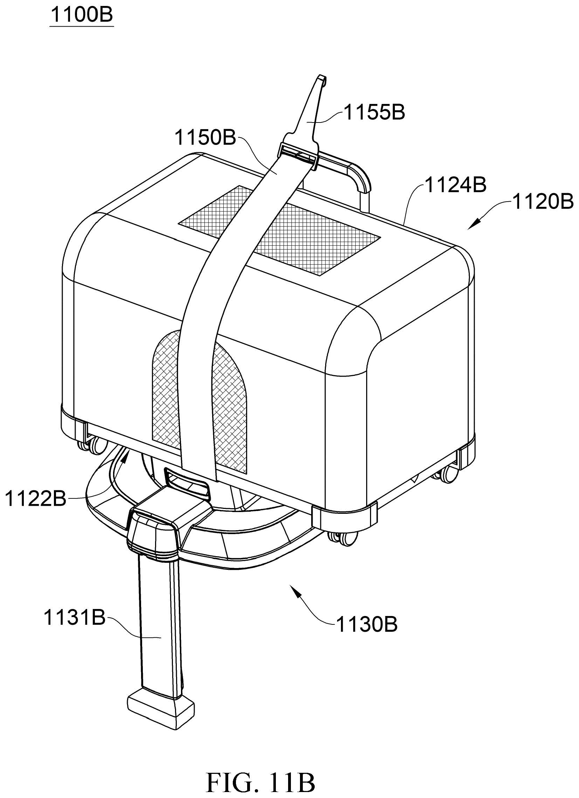

Referring to FIG. 11B, an animal transportation device 1100B according to an embodiment of the present disclosure is illustrated. The animal transportation device 1100B includes an animal carrier 1120B and a fixing base 1130B.

Similarly, the animal transportation device 1100B of this embodiment also includes an anchoring device composed of a webbing 1150B and a connection member 1155B. One end of the webbing 1150B is fixed to a bottom surface 1122B of a box of the animal carrier 1120B close to a front side (a side relatively away from the backrest of the rear seat of the vehicle) or a bottom fixing bracket or a fixing base 1130B, while the other end thereof is connected to the connection member 1155B to be fixed to a corresponding fixing point (as an anchor point, not shown in this figure) above the rear seat of the vehicle or over the rear seat to the rear bottom. In this way, the webbing 1150B extends through a long side surface of the box of the animal carrier 1120B on a distal side of the box (i.e., the side relatively away from the backrest of the rear seat of the vehicle), so as to encircle the entire box and then be fixed through the connection member 1155B to the corresponding fixing point above the rear seat of the vehicle or over the rear seat to the rear bottom, which may provide a more stable support and fixation effect for the animal transportation device 1100B inside the vehicle.

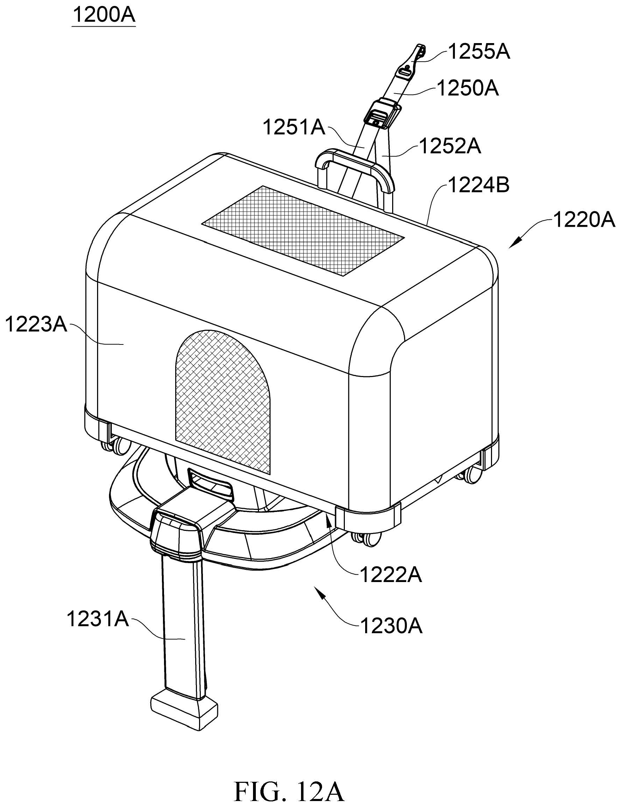

Referring to FIG. 12A, an animal transportation device 1200A according to an embodiment of the present disclosure is illustrated. The animal transportation device 1200A includes an animal carrier 1220A and a fixing base 1230A.

The animal transportation device 1200A of this embodiment has the same configuration and structure as the above animal transportation device 1100A. However, the difference is that in this embodiment, an anchoring device included in the animal carrier 1220A is designed as a Y-shaped structure. In detail, the anchoring device mainly includes a first webbing 1251A, a second webbing 1252A, and a connection webbing 1250A. One end of each of the first webbing 1251A and the second webbing 1252A may be connected to a same side of an intermediate adjuster (not shown in this figure), or combined (such as by sewing) and then connected to the same side of the adjuster. The other end of each of the first webbing 1251A and the second webbing 1252A is fixedly connected to a bottom surface 1222A of the animal carrier 1220A close to a rear side (a side provided with a pull-rod device) or connected to a bottom fixing bracket or a fixing base 1230A. In an implementation where the first webbing 1251A and the second webbing 1252A are fixedly connected to the bottom fixing bracket, the fixed connection may be realized by attaching a connection member such as a hook, a quick release buckle, a D-hook and a magnetic element to one end of the webbing, and connecting the webbing with the tube of the bottom fixing bracket through the connection member. This implementation allows the webbing to be detached from the bottom fixing bracket when the animal carrier is detached from the fixing base, achieving the technical effect of easy storage and convenient carrying. In this embodiment, one end of the connection webbing 1250A extends through another side of the adjuster, to be connected with the first webbing 1251A and the second webbing 1252A; the other end of the webbing 1250A is connected with a connection member (e.g., a hook) 1255A, to be fixed to a corresponding fixing point (as an anchor point, not shown in this figure) above the rear seat of the vehicle or over the rear seat to the rear bottom, thereby forming the Y-shaped structure. In this way, by using the first webbing 1251A and the second webbing 1252A to evenly distribute the anchoring force, the anchoring device may provide a more stable support and fixation effect for the animal transportation device 1200A inside the vehicle.

In addition, in this embodiment, magnetic elements (not shown in this figure) that attract each other may be embedded or attached to the first webbing 1251A and the second webbing 1252A, so that the first webbing 1251A and the second webbing 1252A are attracted together, which may give the anchoring device a beautiful and simple appearance.

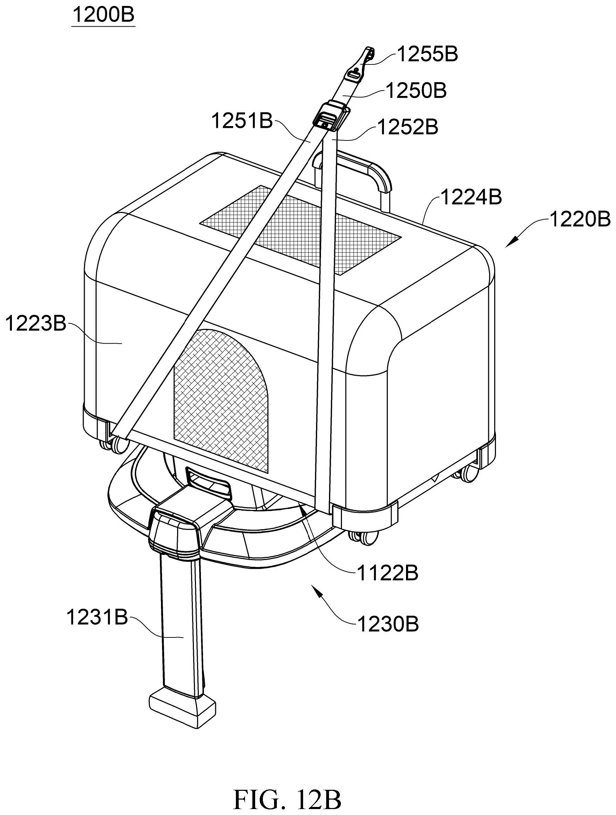

Referring to FIG. 12B, an animal transportation device 1200B according to an embodiment of the present disclosure is illustrated. The animal transportation device 1200B includes an animal carrier 1220B and a fixing base 1230B.

The animal transportation device 1200B of this embodiment has the same configuration and structure as the above animal transportation device 1200A. However, the difference is that in this embodiment, one end of each of a first webbing 1251B and a second webbing 1252B is fixed to a bottom surface of the box of the animal carrier 1220B close to a front side (a side relatively away from the backrest of the rear seat of the vehicle). In this way, the first webbing 1251B and the second webbing 1252B extend through a long side surface 1223B of the animal carrier 1220B, so as to encircle the entire box and then be fixed through a connection member 1255B to a corresponding fixing point above the rear seat of the vehicle or over the rear seat to the rear bottom, which may provide a more stable support and fixation effect for the animal transportation device 1200B inside the vehicle.

In the present disclosure, the term "integral fixing device" or "integrated-type fixing device" means that the fixing device of the animal carrier in the present disclosure is directly fixed or embedded at the bottom of the box, and is combined with the box of the animal carrier, so that the animal carrier in the present disclosure may be directly fixed to the vehicle seat by combining the box itself with the corresponding fixing base.

In conclusion, the present disclosure provides the animal transportation device and the animal carrier having the integrated fixing device, as well as the corresponding fixing device. According to the present disclosure, the fixing device (the bottom fixing bracket) of the animal carrier is directly fixed or embedded at the bottom of the box, and is integrated with the pull-rod device and the reinforcing side frame of the animal carrier and combined with the box of the animal carrier in an inseparable manner, so that the animal carrier may be stably fixed to the corresponding fixing base directly by the bottom fixing bracket of the box and hence stably mounted in the rear seat of the vehicle for stable transportation.

It should be noted that all parameters, dimensions, materials and constructions described in the present disclosure are presented as exemplary illustrations, and actual parameters, dimensions, materials and/or constructions depend on specific applications or applications using the teachings of the present disclosure. It should be understood that the aforementioned embodiments are mainly presented by way of examples and within the scope of the appended claims and their equivalents, the concepts and embodiments of the present disclosure may be realized differently than those specifically described and claimed for protection. The embodiments of the present disclosure involve each of the individual features, elements, products, materials, components and/or methods mentioned above.

In addition, if such features, elements, products, materials, components and/or methods are not inconsistent with each other, any combination of two or more such features, elements, products, materials, components and/or methods is included within the scope of the present disclosure. Other substitutions, modifications, changes, and omissions may be made to the designs, operating conditions, and configuration structures of the corresponding elements of the above embodiments without departing from the scope of the present disclosure. The use of numerical ranges does not exclude equivalents falling outside the range that fulfill the same function in the same manner to produce the same result.

## Claims

1. An animal carrier, comprising:
a box comprising an animal receiving space formed by connecting a top surface and a bottom surface opposite to each other, a first side surface and a second side surface opposite to each other, and a third side surface and a fourth side surface opposite to each other; and
a fixing bracket fixed to the bottom surface, the box being fixed to a fixing base for a vehicle through the fixing bracket, wherein the fixing bracket comprises:
a long tube;
a first short tube and a second short tube, which are opposite to each other and connected to both ends of the long tube, respectively; and
a bent tube having both ends connected to the first short tube and the second short tube respectively, forming a closed frame structure together with the long tube, the first short tube, and the second short tube, and the bent tube having at least one bent portion extending towards an interior of the closed frame structure.

2. The animal carrier according to claim 1, wherein there is a gap between the fixing bracket and a lower edge of the bottom surface.

3. The animal carrier according to claim 1, further comprising:
at least one reinforcing side frame, having a contour corresponding to one of the first side surface and the second side surface or one of the third side surface and the fourth side surface, and being connected to the fixing bracket in a manner perpendicular to the bottom surface and attached to one of the first side surface and the second side surface or one of the third side surface and the fourth side surface.

4. The animal carrier according to claim 3, further comprising:
at least one reinforcing rib connecting the fixing bracket to the at least one reinforcing side frame.

5. The animal carrier according to claim 3, further comprising:
a pull-rod device connected to a connection side between the reinforcing side frame and the fixing bracket, and connected to a side of the reinforcing side frame opposite to the connection side, wherein the pull-rod device, the reinforcing side frame, and the fixing bracket are fixedly connected as an integrated structure.

6. The animal carrier according to claim 1, further comprising:
a pull-rod device fixed to one of a long side surface and a short side surface of the box, and fixedly connected with the fixing bracket as an integrated structure.

7. The animal carrier according to claim 5 or 6, wherein the pull-rod device comprises a pivotable grip portion at a free end of the pull-rod device.

8. The animal carrier according to claim 1, further comprising a stabilizing webbing surrounding a periphery of the box.

9. The animal carrier according to claim 8, wherein the animal carrier further comprises a pull-rod device fixed to one of the first side surface, the second side surface, the third side surface, and the fourth side surface, and the stabilizing webbing surrounds the box and the pull-rod device.

10. The animal carrier according to claim 1, further comprising an anchoring device configured to connect to a corresponding anchoring point in the vehicle, wherein the anchoring device comprises:
a webbing extending through a bottom of the box, an end of the webbing being able to protrude from the bottom surface of the box; and
a connection member connected to the end of the webbing and configured to connect to the corresponding fixing point.

11. The animal carrier according to claim 1, further comprising an anchoring device configured to connect to a corresponding anchoring point in the vehicle, wherein the anchoring device comprises:
at least one webbing, a first end of the webbing being connected to a bottom of the box;
an adjuster connected to the webbing, wherein a second end of the webbing extends through the adjuster and is exposed from the adjuster;
a connection webbing, a first end of the connection webbing being connected to the adjuster; and
a connection member connected to a second end of the connection webbing and configured to connect to the anchoring point.

12. An animal transportation device, comprising:
the animal carrier according to any one of claims 1 to 11; and
a fixing base, comprising:
a carrier mounting portion configured to accommodate and fix the animal carrier;
a support column, one end of which is fixedly connected to a front side of the carrier mounting portion, and another end of which is configured to abut against a floor inside a vehicle; and
a connector provided on a rear side of the carrier mounting portion and configured to connect to a corresponding fixing point inside the vehicle.

13. The animal transportation device according to claim 12, wherein the carrier mounting portion has a contour corresponding to a bottom of the animal carrier and comprises at least one ridge, wherein the ridge is provided with at least one recess to accommodate and fix the fixing bracket.
